# EUROPEAN PATENT APPLICATION

(11) **EP 3 292 767 A1**
(43) Date of publication of application: **14.03.2018**
(21) Application number: 15908618.0
(22) Date of filing: 07.12.2015
(51) Int. Cl.: A23F 3/18

(54) **TEA BREWING METHOD**

(30) Priority: 20.11.2015 CN 201510809062
(71) Applicant: Huang, Xiaoping, Shenzhen, Guangdong 518000 (CN)
(72) Inventor: Huang, Xiaoping, Shenzhen, Guangdong 518000 (CN)
(74) Representative: Sun, Yiming
(86) International application number: PCT/CN2015/096529
(87) International publication number: WO 2017/084122

(57) **Abstract**

A method of brewing tea, includes the following steps: (1) obtaining tea leaves and placing the tea leaves in water at 0 to 70 °C to carry out washing, and draining; (2) adding the tea leaves in hot water at 70 to 100 °C in one or more times and brewing for 0.1 to 40 minutes; and (3) obtaining and adding an appropriate amount of water at 0 to 70 °C or an ice cube to tea after the brewing in step (2), so as to lower a temperature of the tea to a drinkable temperature. This method adopts a way of high-temperature brewing and rapid cooling, and may satisfy different people's preference in tea.

## Description

### Field of Technology

The present invention relates to the field of technology in brewing tea products, in particular to a method of brewing tea.

### Background Technology

At the present time, people generally brew tea leaves using water at 80 °C to 100 °C, and then wait for temperature of the tea to lower naturally to a level suitable for drinking before tasting the tea. Different people have different standards for the mouthfeel of tea. Meanwhile, the mouthfeel of tea changes as the temperature and time in which the tea leaves are immersed change. However, the current method of brewing tea is by cooling naturally, and rate of temperature change of the tea is not controlled by the person. This would lead to the situation where, once the tea is naturally cooled to a drinkable temperature, mouthfeel of the tea is no longer the mouthfeel preferred by the tea drinkers. When the tea leaves are immersed in water at high temperature for prolonged period of time, a large amount of astringency substances would be released, which makes the mouthfeel of the tea to become poor.

### Summary of the Invention

The objective of the present invention is to provide a method of brewing tea, for solving the problem of poor mouthfeel of tea caused by brewing tea for once as adopted currently in daily life.

To achieve the above objective, the technical solution provided by the present invention is:
A method of brewing tea according to the present invention, including the following steps:
   (1) obtaining tea leaves and placing the tea leaves in water at 0 to 70 °C to carry out washing, and draining;
   (2) adding the tea leaves drained in step (1) in hot water at 70 to 100 °C and brewing for 0.1 to 40 minutes; and
   (3) obtaining and adding an appropriate amount of water at 0 to 70 °C or an ice cube to tea after the brewing in step (2), so as to lower a temperature of the tea to a drinkable temperature.

Wherein, the hot water at 70 to 100 °C added in step (2) needs to at least submerge the tea leaves.

Wherein, after adding the water at 0 to 70 °C or the ice cube in step (3), the temperature of the tea is lowered to 0 to 70 °C.

Wherein, the water at 0 to 70 °C or the ice cube is added in step (3) in one or more times.

Wherein, the tea leaves in step (1), the hot water at 70 to 100 °C in step (2), and the water at 0 to 70 °C or the ice cube added in step (3) are in a mass ratio of 1: (1-500): (1-500).

Compared with the existing technology, the method of brewing tea according to the present invention adopts a way of high-temperature brewing and rapid cooling, so as to improve the mouthfeel of the tea and satisfying different people's preference in tea.

### Description of the Drawing

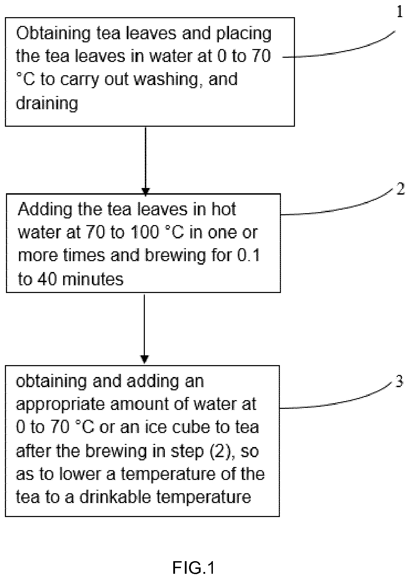

Fig. 1 is a flow chart of the method of brewing tea according to the present invention.

### Detailed Description of the Embodiments

The present invention is further described in detail below with reference to the accompanying drawing.

Referring to Fig. 1, the method of brewing tea, includes the following steps:
(1) obtaining tea leaves and placing the tea leaves in water at 0 to 70 °C to carry out washing, and draining;
(2) adding the tea leaves in hot water at 70 to 100 °C in one or more times and brewing for 0.1 to 40 minutes; and
(3) obtaining and adding an appropriate amount of water at 0 to 70 °C or an ice cube to tea after the brewing in step (2), so as to lower a temperature of the tea to a drinkable temperature.

Wherein, the hot water at 70 to 100 °C added in step (2) needs to at least submerge the tea leaves.

More specifically, after adding the water at 0 to 70 °C or the ice cube in step (3), the temperature of the tea is lowered to 0 to 70 °C. Moreover, the water at 0 to 70 °C may be added in step (3) in one or more times. The ice cube may also be added in one or more times.

Wherein, the tea leaves in step (1), the hot water at 70 to 100 °C in step (2), and the water at 0 to 70 °C or the ice cube added in step (3) are in a mass ratio of 1 : (1-500) : (1-500).

The above method may be repeated for two to three times, thereby discarding the tea leaves.

The present invention will be described below with reference to specific experimental data, wherein the method of brewing tea according to the present invention was compared with the traditional method of brewing for once:
Based on long-term observation, tasting and research, for the same kind of tea leaves, the color of the tea is directly related to its astringency, while the astringency of the tea is directly related to its mouthfeel. The darker the color, the more astringency it tastes. The more astringency it tastes, the worse the mouthfeel. Based on this, we adopted a method of detecting the color intensity of the tea. The present method of brewing tea was compared with the traditional tea brewing method, and the test process and data are as follows:
   Firstly, a sufficient amount of boiling water (maintained at a state of boiling during the process of the test) and a sufficient amount of water at room temperature were prepared.

Two 3 g portions of tea leaves were obtained, washed with water at room temperature, drained, and placed into two clean tea cups, respectively. The two tea cups were labeled as A and B.

200 ml of boiling water was added to cup B. Temperature of the tea was allowed to lower naturally to a level suitable for drinking (about 50 °C, which took about 30 minutes). When the temperature of the tea in cup B was lowered to a drinkable level, 100 ml of boiling water was added to cup A. After 5 minutes, 100 ml of water at room temperature was added to cup A and stirred well. At this point, the temperature of the tea in cup A is about 50 °C.

The tea in cups A and B was tasted, respectively, to determine the levels of bitterness and astringency.

The tea in cups A and B was poured into two other clean containers (while the tea leaves were retained in the cups for later use), respectively. After zero adjustment using purified water, a 723N visible spectrophotometer was used to measure the absorbance of the two tea samples at 380 nm wavelength, respectively.

Steps 3-6 of the above process were repeated on the remaining tea leaves.

The above step was repeated one more time by changing "after 5 minutes, 100 ml of water at room temperature was added to cup A" to "after 2 minutes, 100 ml of water at room temperature was added to cup A", while the rest of the process remained unchanged. The data was recorded.

The test data and analysis were as follows:

| Tea | | A (method according to the present application) | | B (traditional method) | |
|---|---|---|---|---|---|
| | | Taste | Absorbance | Taste | Absorbance |
| 1^{st} process | 1^{st} brew | less astringency, sweet aftertaste | 0.745 | More astringency, sweet aftertaste | 1.129 |
| | 2^{nd} brew | Slightly astringency, sweet | 0.612 | More astringency, sweet aftertaste | 0.872 |
| 2^{nd} process | 1^{st} brew | Slightly astringency, sweet | 0.523 | More astringency, sweet aftertaste | 1.108 |
| | 2^{nd} brew | No astringency, slightly sweet | 0.464 | More astringency, sweet aftertaste | 0.885 |

When comparing the test data between the first and second processes, it can be seen that the method according to the present invention may brew tea with better mouthfeel, while there was little difference in mouthfeel between the first and second brews. The comparison of data between the first and second processes shows that the method of brewing tea according to the present application may brew tea with different mouthfeel.

The above content is merely the preferred embodiments of the present invention and is not intended to limit the working solutions of the present invention. Based on the major concept and gist of the present invention, one skilled in the art may carry out corresponding modification or revision very conveniently. Thus, for the scope of protection of the present invention, the scope sought to be protected by the claims should prevail.

## Claims

1. A method of brewing tea, comprising the following steps:
(1) obtaining tea leaves and placing the tea leaves in water at 0 to 70 °C to carry out washing, and draining;
(2) adding the tea leaves in hot water at 70 to 100 °C in one or more times and brewing for 0.1 to 40 minutes; and
(3) obtaining and adding an appropriate amount of water at 0 to 70 °C or an ice cube to tea after the brewing in step (2), so as to lower a temperature of the tea to a drinkable temperature.

2. The method according to claim 1, wherein the hot water at 70 to 100 °C added in step (2) needs to at least submerge the tea leaves.

3. The method according to claim 1, wherein after adding the water at 0 to 70 °C or the ice cube in step (3), the temperature of the tea is lowered to 0 to 70 °C.

4. The method according to claim 1, wherein the water at 0 to 70 °C or the ice cube is added in step (3) in one or more times.

5. The method according to claim 1, wherein the tea leaves in step (1), the hot water at 70 to 100 °C in step (2), and the water at 0 to 70 °C or the ice cube added in step (3) are in a mass ratio of 1: (1-500) : (1-500).
